# EUROPEAN PATENT APPLICATION

(11) **EP 4 843 794 A1**
(43) Date of publication of application: **25.11.2026**
(21) Application number: 25177919.5
(22) Date of filing: 21.05.2025
(51) Int. Cl.: B60C 11/12

(54) **PNEUMATIC TIRE**

(71) Applicant: Kumho Tire Co., Inc., Gwangju 62392 (KR)
(72) Inventor: LIM, Chanmook, 62392 Gwangju (KR)
(74) Representative: BCKIP Part mbB

(57) **Abstract**

Pneumatic tire comprises: a tread having a tread surface contacting a travel road surface; a side wall extending in a radial direction of the tire to form a side surface of the tire; a bead portion contacting a rim of a tire wheel and configured to provide a support force; and a carcass configured to provide a frame of the tire, wherein the tread includes: a groove formed to be recessed inward in the radial direction on the tread surface, and extending along a circumferential direction of the tire; and plurality of sipes formed to be recessed inward from the tread surface in the radial direction, and disposed along the circumferential direction, wherein each sipe includes: a first sipe surface and a second sipe surface formed to face each other, and wherein the first sipe surface includes: a first convex portion protruding from the first sipe surface in one direction facing the second sipe surface; and a first concave portion connected to the first convex portion and recessed in an opposite direction of the one direction, wherein the first convex portion and the first concave portion are disposed along an extension direction of said each sipe.

## Description

### BACKGROUND OF THE INVENTION

### Field of the Invention

The present disclosure relates to a pneumatic tire.

### Description of the Related Art

In general, a pneumatic tire serves to support the entire load of a vehicle with air in an interior thereof, absorb an impact from a road surface due to an impact absorption operation by an internal pneumatic pressure, and enable basic travel, stop, and change of the driving direction by friction force between the road surface and the tire.

The pneumatic tire includes a tread that forms a ground-contacting surface of the tire, a carcass with a fabric code, a side wall that protects the carcass, a bead portion that mounts the tire to a rim, and an apex that is positioned above the bead portion.

Meanwhile, with the development of the technologies in the field of the pneumatic tires, the pneumatic tires that have effects, such as reduction of noise and vibration, as well as safe driving of the vehicles, have been developed. In addition, users are considering the mileage, which is a distance, by which the pneumatic tire may travel, and the durability of pneumatic tires, as well as the effects of safe driving, and reduction of noise and vibration, as criteria for purchase.

However, to improve the mileage and the durability of the pneumatic tire, it is necessary to suppress an abnormal wear phenomenon of the pneumatic tire. The abnormal wear phenomenon of the pneumatic tire occurs in various forms, for example, wavy wear, shoulder step wear, and local wear, including one-sided wear, in which wear of a tread of the pneumatic tire occurs on one side disproportionately faster than on the other sides.

To prevent an abnormal wear and improve the mileage of the pneumatic tire, a need for a pneumatic tire with an improved rigidity of a block is emerging.

### SUMMARY OF THE INVENTION

An embodiment of the present disclosure has been invented in consideration of the background art, and provides a pneumatic tire that may improve mileage and durability of a pneumatic tire by minimizing movement of a block grounded to a ground surface to prevent an abnormal wear phenomenon.

According to an embodiment of the present disclosure, the mileage and the durability of the pneumatic tire may be improved by minimizing the movement of the block grounded to the ground surface to prevent an abnormal wear.

In accordance with one embodiment of the present disclosure, pneumatic tire comprises: a tread having a tread surface contacting a travel road surface; a side wall extending in a radial direction of the tire to form a side surface of the tire; a bead portion contacting a rim of a tire wheel and configured to provide a support force; and a carcass configured to provide a frame of the tire, wherein the tread includes: a groove formed to be recessed inward in the radial direction on the tread surface, and extending along a circumferential direction of the tire; and a plurality of sipes formed to be recessed inward from the tread surface in the radial direction, and disposed along the circumferential direction, wherein each sipe includes: a first sipe surface and a second sipe surface formed to face each other, and wherein the first sipe surface includes: a first convex portion protruding from the first sipe surface in one direction facing the second sipe surface; and a first concave portion connected to the first convex portion and recessed in an opposite direction of the one direction, wherein the first convex portion and the first concave portion are disposed along an extension directionof said each sipe.

Further, each sipe may be formed in an extension direction skewed from the circumferential direction to be connected to the groove.

Further, the first convex portion and the first concave portion may be formed in a tapered shape, wherein the first convex portion may include: a first convex upper surface being a surface most protruded from the first sipe surface, when viewed in the one direction facing the second sipe surface, and wherein the first concave portion may include: a first concave upper surface being a surface most recessed from the first sipe surface, when viewed in the opposite direction.

Further, the first convex portion may further include: a first convex side surface extending from the first sipe surface toward the first convex upper surface, and surrounding the first convex upper surface, and wherein a width of the first convex side surface in the extension direction may become smaller as it becomes closer to the first convex upper surface.

Further, the second sipe surface may include: a second convex portion protruding from the second sipe surface in the opposite direction facing the first sipe surface, and corresponding to a shape of the first concave portion to be engaged therewith; and a second concave portion connected to the second convex portion along the extension direction to be recessed in the one direction.

Further, a length from one end of the first convex portion disposed on an outermost side with respect to the radial direction to an uppermost end of each sipe in the radial direction may be 0.5 mm or more and 2 mm or less, and wherein a length from the opposite end of the first convex portion disposed on an innermost side with respect to the radial direction to a lowermost end of each sipe may be 0.5 mm or more and 2 mm or less.

Further, a width of any one of the first convex portion and the first concave portion in the extension direction may be 2 mm or more and 4 mm or less.

Further, a protrusion protruding while defining a curved surface having a specific curvature may be formed at at least a portion of the first convex upper surface, and wherein a recess recessed while defining a curved surface having a specific curvature may be formed at at least a portion of the first concave upper surface.

Further, a plurality of first convex portions and a plurality of first concave portions may be provided, and the plurality of first convex portions and the plurality of first concave portions may be alternately arranged along the extension direction, in which each sipe extends.

### BRIEF DESCRIPTION OF THE DRAWINGS

FIG. 1 is a view illustrating a pneumatic tire according to a first embodiment of the present disclosure.
FIG. 2 is a view illustrating a first sipe surface of a sipe of a pneumatic tire according to a first embodiment of the present disclosure.
FIG. 3 is a view illustrating a second sipe surface of a sipe of a pneumatic tire according to a first embodiment of the present disclosure.
FIG. 4 is a cross-sectional view taken along line I-I' of FIG. 1.
FIG. 5 is a view illustrating a state, in which a sipe of a pneumonia tire is disposed in a block according to a second embodiment of the present disclosure.
FIG. 6 is a view illustrating a first sipe surface of a sipe of a pneumatic tire according to a second embodiment of the present disclosure.
FIG. 7 is a view illustrating a second sipe surface of a sipe of a pneumatic tire according to a second embodiment of the present disclosure.
FIG. 8 is a cross-sectional view taken along line II-II' of FIG. 5.

### DETAILED DESCRIPTION OF THE INVENTION

Hereinafter, specific embodiments for implementing the technical idea of the present disclosure will be described in detail with reference to the drawings.

In addition, in describing the present disclosure, when it is determined that detailed descriptions of known configurations or functions may obscure the gist of the present disclosure, the detailed descriptions will be omitted.

Moreover, it should be understood that when a component is referred to as being 'connected to', or 'provided on' another component, it may be directly connected to, or provided on another component, but other components may exist between the components.

The terms used in the present specification are only used for describing the specific embodiments and are not intended to limit the present disclosure. Singular expressions include plural expressions unless the context clearly indicates otherwise.

In addition, in the present specification, expressions such as upper, lower, side, etc. are described based on the drawings, and it is made clear in advance that they may be expressed differently if the direction of the object is changed. For the same reason, some components in the accompanying drawings are exaggerated, omitted, or schematically illustrated, and the size of each component does not entirely reflect the actual size.

Further, terms including ordinal numbers, such as first, second, etc., may be used to describe various components, but the components are not limited by these terms. These terms are only used to distinguish one component from another.

The meaning of "including" used in the present specification specifies specific features, regions, integers, steps, operations, elements and/or components, and does not exclude the presence or addition of other specific features, regions, integers, steps, operations, elements, components, and/or groups.

Hereinafter, a detailed configuration of a pneumatic tire 1 according to an embodiment of the present disclosure will be described with reference to the drawings.

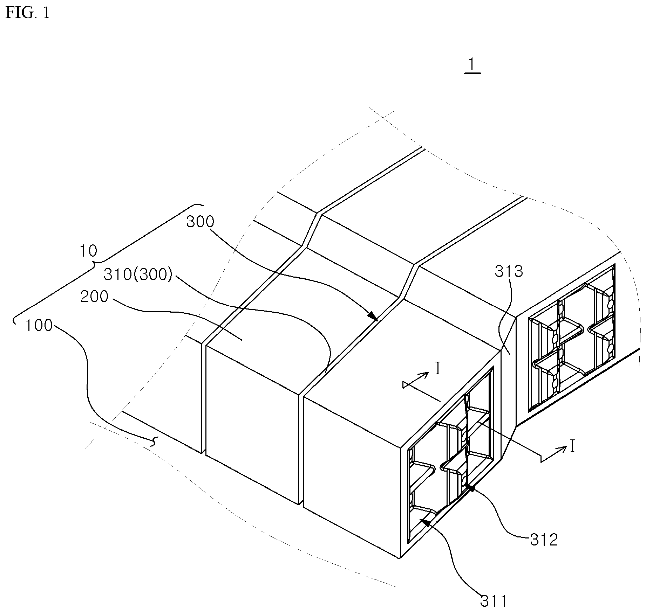

Hereinafter, referring to FIG. 1, the pneumatic tire 1 according to an embodiment of the present disclosure may include a tread 10, a side wall (not illustrated), a bead portion (not illustrated), and a carcass (not illustrated).

The tread 10 is a component that is directly grounded to a road surface, corresponds to a thick rubber layer, and may protect an interior of the tire. The tread 10 may be formed of a rubber material. Furthermore, the tread 10 may be disposed outside the pneumatic tire 1. A surface of the tread 10 is a portion that contacts the road surface, and may extend toward the side wall of the pneumatic tire 1. The tread 10 may include a groove 100, a block 200, and a sipe 300.

The groove 100 may be formed in the tread 10 to improve a water discharge performance, a conditional friction performance, and the like of the pneumatic tire 1. The groove 100 may be formed to be recessed inward from the surface of the tread 10. Furthermore, the groove 100 may be formed in a circumferential or an axial direction of the pneumatic tire 1, or may extend in a direction that is skewed from the circumferential direction or the axial direction. Hereinafter, the groove 100 will be described based on that it is formed in the circumferential direction, but the present disclosure is not limited thereto. A plurality of grooves 100 may be provided, and the plurality of grooves 100 may be disposed to be spaced apart from each other. For example, the plurality of grooves 100 formed in the circumferential direction may be disposed to be spaced apart from each other in the axial direction.

The block 200 may be provided on an outer surface of the tread 10 to adjust a driving force, a braking force, a turning force, and the like of the pneumatic tire 1 when the vehicle is driven. The block 200 may be a portion that directly contacts the road surface when the vehicle is driven. The block 200 may generate a driving force while directly contacting the road surface when the vehicle is driven, and may generate a braking force when the brake is stepped on. Furthermore, when a travel direction of the vehicle is changed, the block 200 may generate a steering force. The block 200 may be formed by a groove 100 that is formed in the circumferential direction of the pneumatic tire 1 and the sipe 300. Furthermore, a plurality of blocks 200 may be provided on an outer surface of the tread 10. The sipe 300 may be disposed on a side surface that is formed perpendicularly to a surface of the block 200, which contacts the road surface.

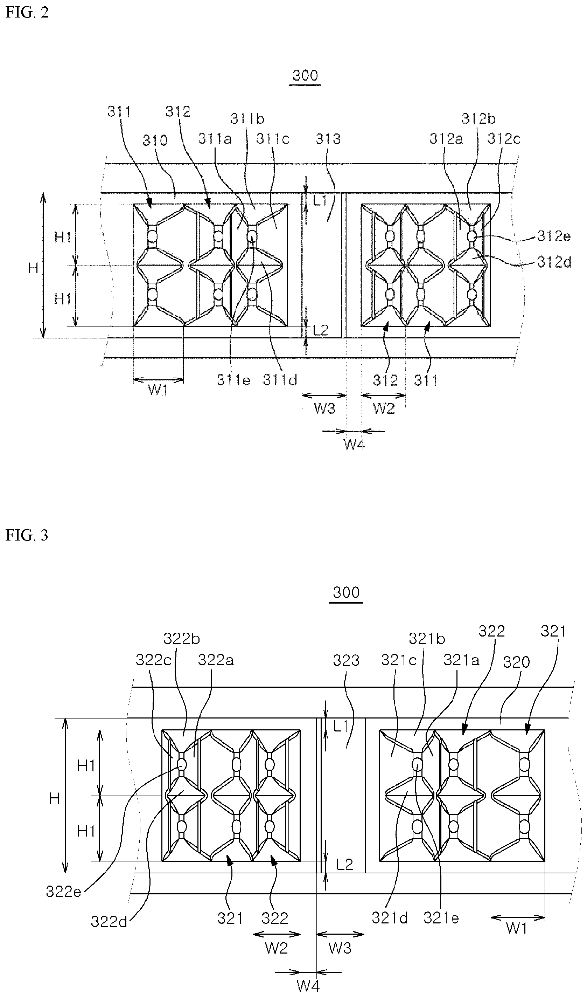

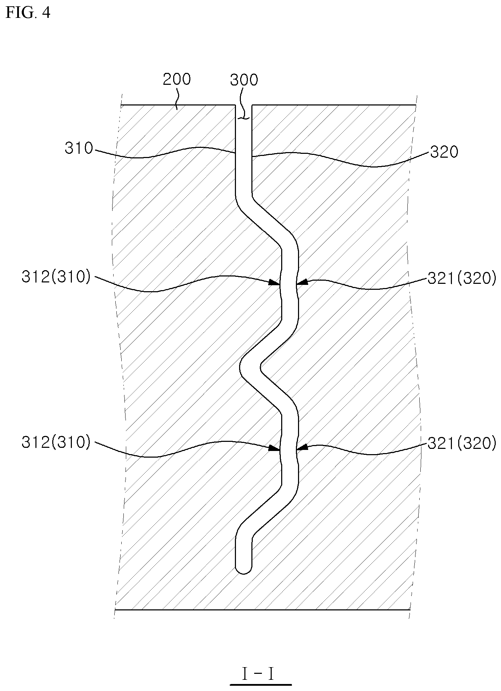

Referring to FIGS. 2 to 4, the sipe 300 may be formed to have a specific shape at a portion of the block 200 to minimize movement of the block 200. The sipe 300 may be formed to be recessed inward from a surface of the tread 10. Furthermore, the sipe 300 may extend in an extension direction that is skewed from a direction, in which the groove 100 extends. The sipe 300 may be connected to the groove 100. Because the sipe 300 has a complex three-dimensional structure, it may disperse stress generated during driving while preventing the block 200 from being easily pressed or bent. Furthermore, one-sided wear and wavy wear may be prevented by the sipe 300 as the block 200 is stably deformed. The sipe 300 may include a first sipe surface 310 and a second sipe surface 320.

Referring back to FIG. 2, the first sipe surface 310 may be a surface that defines the sipe 300. The first sipe surface 310 may be formed to face the second sipe surface 320. Furthermore, at least a portion of the first sipe surface 310 may be formed flat in parallel to the second sipe surface 320. However, the present disclosure is not limited thereto, and at least a portion of the first sipe surface 310 may also be formed in a three-dimensional shape having a specific curvature. The first sipe surface 310 may include a first concave portion 311, a first convex portion 312, and a first connector 313.

The first concave portion 311 may be recessed in an opposite direction to one direction that faces the second sipe surface 320 from the first sipe surface 310. The first concave portion 311 may be disposed to be connected to the first convex portion 312 along the extension direction, in which the sipe 300 extends. Furthermore, a plurality of first concave portions 311 may be provided. The plurality of first concave portions 311 may be connected to each other along a radial direction of the pneumatic tire 1. The first concave portion 311 may be formed in a taper shape. The first concave portions 311 may be recessed inward with reference to a plane of the first sipe surface 310 to absorb or alleviate movement of the block 200 when the block 200 is pressed and deformed during driving. Furthermore, the first concave portion 311 may be engaged with the second convex portions 322 that will be described later to reduce the block 200 to vibrate. Furthermore, a width W1 of the first concave portions 311 in the extension direction, in which the sipe 300 extends, may be 2 mm or more and 4 mm or less. A length L1 from one end of the first concave portion 311, which is disposed on an outermost side with respect to the radial direction that faces the center of the tire, to an uppermost end of the sipe 300 in the radial direction may be 0.5 mm or more and 2 mm or less. A length L2 from an opposite end of the first concave portion 311, which is an opposite side to the one side disposed on an innermost side along the radial direction that faces the center of the tire, to a lowermost end of the sipe 300 in the radial direction may be 0.5 mm or more and 2 mm or less. Furthermore, a height H1 of the first concave portion 311 in the radial direction may be 0.3 to 0.4 times the height H of the sipe 300.

The first concave portion 311 may include a first concave side surface A 311a, a first concave side surface B 311b, a first concave side surface C 311c, a first concave side surface D 311d, and a first concave upper surface 311e.

The first concave side surfaces 311a, 311b, 311c, and 311d may define a side surface of the first concave portion 311. The first concave side surfaces 311a, 311b, 311c, and 311d may extend from the first sipe surface 310 toward the first concave upper surface 311e. Furthermore, the first concave side surfaces 311a, 311b, 311c, and 311d may be formed to surround the first concave upper surfaces 311e. A width of the first concave side surfaces 311a, 311b, 311c, and 311d in the extension direction of the sipe 300 may be formed to become smaller toward the first concave upper surface 311e. The first concave side surfaces 311a, 311b, 311c, and 311d may be divided into a first concave side surface A 311a, a first concave side surface B 311b, a first concave side surface C 311c, and a first concave side surface D 311d according to the disposition positions thereof.

The first concave side surface A 311a may be disposed at one end of the first concave upper surface 311e when viewed in the extension direction, in which the sipe 300 extends. For example, one end of the first concave side surface A 311a may be connected to the first sipe surface 310, and an opposite end to the one side of the first concave side surface A 311a may be connected to the first concave upper surface 311e. When viewed in the extension direction, in which the sipe 300 extends, the first concave upper surface 311e may be disposed between the first concave side surface A 311a and the first concave side surface C 311c. The first concave side surface B 311b may be disposed at an outer end of the first concave upper surface 311e when viewed in the radial direction of the pneumatic tire 1. For example, an outer end of the first concave side surface B 311b may be connected to the first sipe surface 310, and an inner end of the first concave side surface B 311b, which corresponds to an opposite side to the outer side thereof, may be connected to the first concave upper surface 311e. When viewed in the radial direction of the pneumatic tire 1, the first concave upper surface 311e may be disposed between the first concave side surface B 311b and the first concave side surface D 311d.

The first concave side surface C 311c may be disposed at an opposite end of the first concave upper surface 311e when viewed in the extension direction, in which the sipe 300 extends. For example, an opposite end of the first concave side surface C 311c may be connected to the first sipe surface 310, and one end of the first concave side surface C 311c may be connected to the first concave upper surface 311e.

The first concave side surface D 311d may be disposed at an inner end of the first concave upper surface 311e when viewed in the radial direction of the pneumatic tire 1. For example, an inner end of the first concave side surface D 311d may be connected to the first sipe surface 310, and an outer end of the first concave side surface D 311d may be connected to the first concave upper surface 311e.

The first concave upper surface 311e may be formed to be most distant from the first sipe surface 310 when viewed from an opposite direction corresponding to an opposite side to one direction that faces the second sipe surface 320. In other words, the first concave upper surface 311e may be a surface that is recessed most from the first sipe surface 310. The first concave upper surface 311e may face the second convex upper surface 322e. Furthermore, a distance from the first concave upper surface 311e to the second convex upper surface 322e may be the same as a distance from the first sipe surface 310 to the second sipe surface 320. When the first concave upper surface 311e is formed to be most recessed from the first sipe surface 310, a curvature may be smoothly dispersed so that cracks of or damage to the block 200 may be prevented.

The first convex portion 312 may protrude in one direction that faces the second sipe surface 320 from the first sipe surface 310. The first convex portion 312 may be disposed to be connected to the first concave portion 311 along the extension direction, in which the sipe 300 extends. Furthermore, a plurality of first convex portions 312 may be provided. The plurality of first convex portions 312 may be connected to each other along a radial direction of the pneumatic tire 1. The first convex portion 312 may be formed in a taper shape. The first convex portion 312 may correspond to the shape of the second concave portion 321 to be engaged therewith. When the first convex portion 312 corresponds to the shape of the second concave portion 321 to be engaged therewith, a pressure applied to the block 200 during driving may be dispersed and the movement of the block 200 may be suppressed. Furthermore, a width W2 of the first convex portion 312 may be 2 mm or more and 4 mm or less in the extension direction, in which the sipe 300 extends. A length L1 from one end of the first convex portion 312, which is disposed on an outermost side along the radial direction that faces the center of the tire, to an uppermost end of the sipe 300 in the radial direction may be 0.5 mm or more and 2 mm or less. A length L2 from an opposite end of the first convex portion 312, which is an opposite side to the one side disposed on an innermost side along the radial direction that faces the center of the tire, to a lowermost end of the sipe 300 in the radial direction may be 0.5 mm or more and 2 mm or less. Furthermore, a height H1 of the first convex portion 312 in the radial direction may be 0.3 to 0.4 times the height H of the sipe 300. The first convex portion 312 may include a first convex side surface A 312a, a first convex side surface B 312b, a first convex side surface C 312c, a first convex side surface D 312d, and a first convex upper surface 312e.

The first convex side surfaces 312a, 312b, 312c, and 312d may define a side surface of the first convex portion 312. The first convex side surfaces 312a, 312b, 312c, and 312d may extend from the first sipe surface 310 toward the first convex upper surface 312e. Furthermore, the first convex side surfaces 312a, 312b, 312c, and 312d may be formed to surround the first convex upper surface 312e. A width of the first convex side surfaces 312a, 312b, 312c, and 312d in the extension direction of the sipe 300 may be formed to become smaller toward the first convex upper surface 312e. The first convex side surfaces 312a, 312b, 312c, and 312d may be divided into a first convex side surface A 312a, a first convex side surface B 312b, a first convex side surface C 312c, and a first convex side surface D 312d according to the disposition positions thereof.

The first convex side surface A 312a may be disposed at one end of the first convex upper surface 312e when viewed in the extension direction, in which the sipe 300 extends. For example, one end of the first convex side surface A 312a may be connected to the first sipe surface 310, and an opposite end to the one side of the first convex side surface A 312a may be connected to the first convex upper surface 312e. When viewed in the extension direction, in which the sipe 300 extends, the first convex upper surface 312e may be disposed between the first convex side surface A 312a and the first convex side surface C 312c.

The first convex side surface B 312b may be disposed at an outer end of the first convex upper surface 312e when viewed in the radial direction of the pneumatic tire 1. For example, an outer end of the first convex side surface B 312b may be connected to the first sipe surface 310, and an inner end of the first convex side surface B 312b, which corresponds to an opposite side to the outer side thereof, may be connected to the first convex upper surface 312e. When viewed in the radial direction of the pneumatic tire 1, the first convex upper surface 312e may be disposed between the first convex side surface B 312b and the first convex side surface D 312d.

The first convex side surface C 312c may be disposed at an opposite end of the first convex upper surface 312e when viewed in the extension direction, in which the sipe 300 extends. For example, an opposite end of the first convex side surface C 312c may be connected to the first sipe surface 310, and one end of the first convex side surface C 312c may be connected to the first convex upper surface 312e.

The first convex side surface D 312d may be disposed at an inner end of the first convex upper surface 312e when viewed in the radial direction of the pneumatic tire 1. For example, an inner end of the first convex side surface D 312d may be connected to the first sipe surface 310, and outer end of the first convex side surface D 312d may be connected to the first convex upper surface 312e.

The first convex upper surface 312e may be formed most distant from the first sipe surface 310 when viewed in one direction that faces the second sipe surface 320. In other words, the first convex upper surface 312e may be a surface that protrudes most from the first sipe surface 310. The first convex upper surface 312e may face the second concave upper surface 321e. Furthermore, a distance from the first convex upper surface 312e to the second concave upper surface 321e may be the same as a distance from the first sipe surface 310 to the second sipe surface 320.

The first connector 313 may be connected to the first convex portion 312 or the first concave portion 311 in the extension direction, in which the sipe 300 extends. The first connector 313 may be a portion of the first sipe surface 310. Furthermore, the first connector 313 may be flat. When the first connector 313 is configured to be flat and naturally connects the first convex portion 312 and the first concave portion 311 in the extension direction, in which the sipe 300 extends, a pattern of the sipe 300 may become stable and a force may be smoothly dispersed while being prevented from being concentrated during driving. A width W3 of the first connector 313 in the extension direction, in which the sipe 300 extends, may be the same as a width of the first concave portion 311 or the first convex portion 312, but the present disclosure is not limited thereto and the length may be changed differently. A width W4 from the first connector 313 to one end of the first concave portion 311 or the first convex portion 312 in the extension direction, in which the sipe 300 extends, may be 0.5 mm or more and 2 mm or less.

Referring back to FIG. 3, the second sipe surface 320 may be another surface that defines the sipe 300. The second sipe surface 320 may be formed to face the first sipe surface 310. Furthermore, at least a portion of the second sipe surface 320 may be formed in a three-dimensional shape having a specific curvature. The second sipe surface 320 may include a second concave portion 321, a second convex portion 322, and a second connector 323.

The second concave portion 321 may be recessed in one direction that faces the first sipe surface 310 from the second sipe surface 320. The second concave portion 321 may be disposed to be connected to the second convex portion 322 along the extension direction, in which the sipe 300 extends. Furthermore, a plurality of second concave portions 321 may be provided. The plurality of second concave portions 321 may be connected to each other along a radial direction of the pneumatic tire 1. The second concave portion 321 may be formed in a taper shape. The second concave portions 321 may be recessed inward with reference to a plane of the second sipe surface 320 to absorb or alleviate movement of the block 200 when the block 200 is pressed and deformed during driving. Furthermore, the second concave portion 321 may be engaged with the first convex portions 312 to reduce the block 200 to vibrate. Furthermore, a width W1 of the second concave portions 321 in the extension direction, in which the sipe 300 extends, may be 2 mm or more and 4 mm or less. A length L1 from one end of the second concave portion 321, which is disposed on an outermost side along the radial direction that faces the center of the tire, to an uppermost end of the sipe 300 in the radial direction may be 0.5 mm or more and 2 mm or less. A length L2 from an opposite end of the second concave portion 321, which is an opposite side to the one side disposed on an innermost side along the radial direction that faces the center of the tire, to a lowermost end of the sipe 300 in the radial direction may be 0.5 mm or more and 2 mm or less. Furthermore, a height H1 of the second concave portion 321 in the radial direction may be 0.3 to 0.4 times the height H of the sipe 300. The second concave portion 321 may include a second concave side surface A 321a, a second concave side surface B 321b, a second concave side surface C 321c, and a second concave side surface D 321d.

The second concave side surfaces 321a, 321b, 321c, and 321d define a side surface of the second concave portion 321. The second concave side surfaces 321a, 321b, 321c, and 321d may extend from the second sipe surface 320 toward the second concave upper surface 321e. Furthermore, the second concave side surfaces 321a, 321b, 321c, and 321d may be formed to surround the second concave upper surface 321e. A width of the second concave side surfaces 321a, 321b, 321c, and 321d in the extension direction of the sipe 300 may be formed to become smaller toward the second concave upper surface 321e. The second concave side surfaces 321a, 321b, 321c, and 321d may be divided into a second concave side surface A 321a, a second concave side surface B 321b, a second concave side surface C 321c, and a second concave side surface D 321d according to the disposition positions thereof.

The second concave side surface A 321a may be disposed at one end of the second concave upper surface 321e when viewed in the extension direction, in which the sipe 300 extends. For example, one end of the second concave side surface A 321a may be connected to the second sipe surface 320, and an opposite end to the one side of the second concave side surface A 321a may be connected to the second concave upper surface 321e. When viewed in the extension direction, in which the sipe 300 extends, the second concave upper surface 321e may be disposed between the second concave side surface A 321a and the second concave side surface C 321c.

The second concave side surface B 321b may be disposed at an outer end of the second concave upper surface 321e when viewed in the radial direction of the pneumatic tire 1. For example, an outer end of the second concave side surface B 321b may be connected to the second sipe surface 320, and an inner end that is opposite to the outer side of the second concave side surface B 321b may be connected to the second concave upper surface 321e. When viewed in the radial direction of the pneumatic tire 1, the second concave upper surface 321e may be disposed between the second concave side surface B 321b and the second concave side surface D 321d.

The second concave side surface C 321c may be disposed at an opposite end of the second concave upper surface 321e when viewed in the extension direction, in which the sipe 300 extends. For example, an opposite end of the second concave side surface C 321c may be connected to the second sipe surface 320, and one end of the second concave side surface C 321c may be connected to the second concave upper surface 321e.

The second concave side surface D 321d may be disposed at an inner end of the second concave upper surface 321e when viewed in the radial direction of the pneumatic tire 1. For example, an inner end of the second concave side surface B 321b may be connected to the second sipe surface 320, and an outer end of the second concave side surface B 321b may be connected to the second concave upper surface 321e.

The second concave upper surface 321e may be formed to be most distant from the second sipe surface 320 when viewed in one direction that faces the second sipe surface 320 from the first sipe surface 310. In other words, the second concave upper surface 321e may be a surface that is recessed most from the second sipe surface 320. The second concave upper surface 321e may face the first convex upper surface 312e. Furthermore, a distance from the second concave upper surface 321e to the first convex upper surface 312e may be the same as a distance from the first sipe surface 310 to the second sipe surface 320. When the second concave upper surface 321e is formed to be most recessed from the second sipe surface 320, a curvature may be smoothly dispersed so that cracks of or damage to the block 200 may be prevented.

The second convex portion 322 may protrude in an opposite direction that faces the first sipe surface 310 from the second sipe surface 320. The second convex portion 322 may be disposed to be connected to the second concave portion 321 along the extension direction, in which the sipe 300 extends. Furthermore, a plurality of second convex portions 322 may be provided. The plurality of second convex portions 322 may be connected to each other along a radial direction of the pneumatic tire 1. The second convex portion 322 may be formed in a taper shape. The second convex portion 322 may correspond to the shape of the first concave portion 311 to be engaged therewith. When the second convex portion 322 corresponds to the shape of the first concave portion 311 to be engaged therewith, a pressure applied to the block 200 during driving may be dispersed and the movement of the block 200 may be suppressed. Furthermore, a width W2 of the second convex portion 322 may be 2 mm or more and 4 mm or less in the extension direction, in which the sipe 300 extends. A length L1 from one end of the second convex portion 322, which is disposed on an outermost side along the radial direction that faces the center of the tire, to an uppermost end of the sipe 300 in the radial direction may be 0.5 mm or more and 2 mm or less. A length L2 from an opposite end of the second convex portion 322, which is an opposite side to the one side disposed on an innermost side along the radial direction that faces the center of the tire, to a lowermost end of the sipe 300 in the radial direction may be 0.5 mm or more and 2 mm or less. Furthermore, a height H1 of the second convex portion 322 in the radial direction may be 0.3 to 0.4 times the height H of the sipe 300. The second convex portion 322 may include a second convex side surface A 322a, a second convex side surface B 322b, a second convex side surface C 322c, a second convex side surface D 322d, and a second convex upper surface 322e.

The second convex side surfaces 322a, 322b, 322c, and 322d may define a side surface of the second convex portion 322. The second convex side surfaces 322a, 322b, 322c, and 322d may extend from the second sipe surface 320 toward the second convex upper surface 322e. Furthermore, the second convex side surfaces 322a, 322b, 322c, and 322d may be formed to surround the second convex upper surface 322e. A width of the second convex side surfaces 322a, 322b, 322c, and 322d in the extension direction of the sipe 300 may be formed to become smaller toward the second convex upper surface 322e. The second convex side surfaces 322a, 322b, 322c, and 322d may be divided into a second convex side surface A 322a, a second convex side surface B 322b, a second convex side surface C 322c, and a second convex side surface D 322d according to the disposition positions thereof.

The second convex side surface A 322a may be disposed at one end of the second convex upper surface 322e when viewed in the extension direction, in which the sipe 300 extends. For example, one end of the second convex side surface A 322a may be connected to the second sipe surface 320, and an opposite end to the one side of the second convex side surface A 322a may be connected to the second convex upper surface 322e. When viewed in the extension direction, in which the sipe 300 extends, the second convex upper surface 322e may be disposed between the second convex side surface A 322a and the second convex side surface C 322c.

The second convex side surface B 322b may be disposed at an outer end of the second convex upper surface 322e when viewed in the radial direction of the pneumatic tire 1. For example, an outer end of the second convex side surface B 322b may be connected to the second sipe surface 320, and an inner end that is opposite to the outer side of the second convex side surface B 322b may be connected to the second convex upper surface 322e. When viewed in the radial direction of the pneumatic tire 1, the second convex upper surface 322e may be disposed between the second convex side surface B 322b and the second convex side surface D 322d.

The second convex side surface C 322c may be disposed at an opposite end of the second convex upper surface 322e when viewed in the extension direction, in which the sipe 300 extends. For example, an opposite end of the second convex side surface A 322a may be connected to the second sipe surface 320, and one end of the second convex side surface A 322a may be connected to the second convex upper surface 322e.

The second convex side surface D 322d may be disposed at an inner end of the second convex upper surface 322e when viewed in the radial direction of the pneumatic tire 1. For example, an inner end of the second convex side surface B 322b may be connected to the second sipe surface 320, and an outer end of the second convex side surface B 322b may be connected to the second convex upper surface 322e.

The second convex upper surface 322e may be formed to be most distant from the second sipe surface 320 when viewed from an opposite direction corresponding to the opposite side of one direction. In other words, the second convex upper surface 322e may be a surface that protrudes most from the second sipe surface 320. The second convex upper surface 322e may face the first concave upper surface 311e. Furthermore, a distance from the second convex upper surface 322e to the first concave upper surface 311e may be the same as a distance from the first sipe surface 310 to the second sipe surface 320.

The second connector 323 may be connected to the second convex portion 322 or the second concave portion 321 in the extension direction, in which the sipe 300 extends. The second connector 323 may be a portion of the second sipe surface 320. Furthermore, the second connector 323 may be flat. When the second connector 323 is configured to be flat and naturally connects the second convex portion 322 and the second concave portion 321 in the extension direction, in which the sipe 300 extends, a pattern of the sipe 300 may become stable and a force may be smoothly dispersed while being prevented from being concentrated during driving. A width W3 of the second connector 323 in the extension direction, in which the sipe 300 extends, may be the same as a width of the second concave portion 321 or the second convex portion 322, but the present disclosure is not limited thereto and the length may be changed differently. A width W4 from the second connector 323 to one end of the second concave portion 321 or the second convex portion 322 in the extension direction, in which the sipe 300 extends, may be 0.5 mm or more and 2 mm or less.

The side wall (not illustrated) may protect the carcass on a side surface of the pneumatic tire 1. In other words, the side wall may protect the carcass while withstanding the contraction and expansion that occur when the vehicle is driven.

The bead portion (not illustrated) may mount the pneumatic tire 1 to the rim, and may support the pneumatic tire 1 such that it is prevented from deviating from the rim. The bead portion may be formed to surround one end of the pneumatic tire 1.

The carcass (not illustrated) may define a frame of the pneumatic tire 1. The carcass may support a load of the vehicle, absorb various impacts, and maintain a pneumatic pressure. Furthermore, the carcass may be located on an inner side of the side wall in the radial direction.

Hereinafter, operations and effects of the pneumatic tire 1 having the above-described configuration will be described.

The pneumatic tire 1 according to the first embodiment of the present disclosure may minimize the movement of the block 200 grounded to the ground surface, thereby preventing an abnormal wear phenomenon of the tread 10.

A plurality of sipes 300 may be disposed in the plurality of blocks 200 of the pneumatic tire 1, and at least one surface of the sipe 300 may be formed in a three-dimensional shape. The three-dimensional sipe 300 formed in the block 200 may minimize the movement of the block 200 when the vehicle is driven by increasing the contact surface.

The first concave portions 311 and the first convex portions 312 are arranged alternately with each other, and the second convex portions 322 and the second concave portions 321 are engaged with each other while facing the first concave portion 311 and the first convex portion 312, so that stress that occurs when the first concave portion 311, the first convex portion 312, and the second concave portion 321, and the second convex portion 322 are moved relatively when the vehicle is driven may be absorbed.

Furthermore, as stress is absorbed in the sipe 300, the stress transmitted to the block 200 is reduced, so that an abnormal wear phenomenon may be reduced. Accordingly, the mileage and durability of the pneumatic tire 1 may be improved.

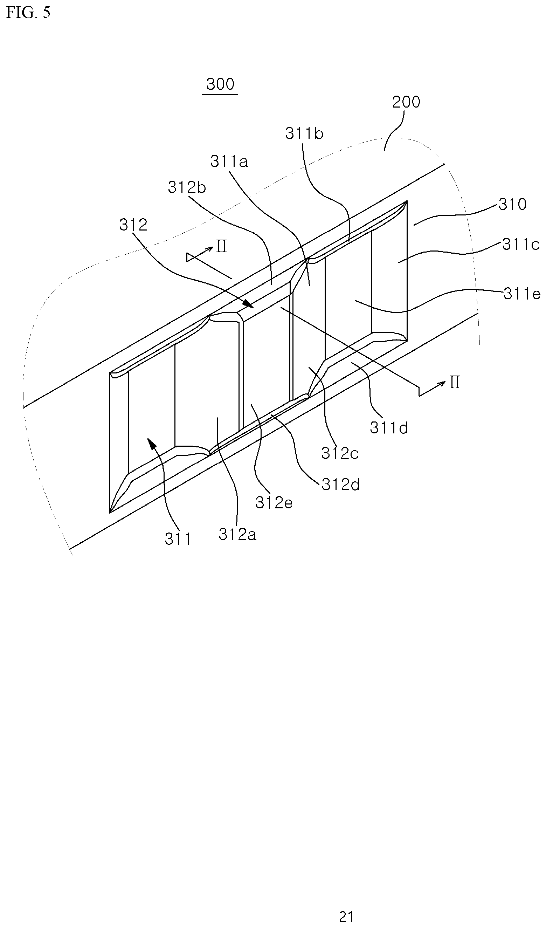

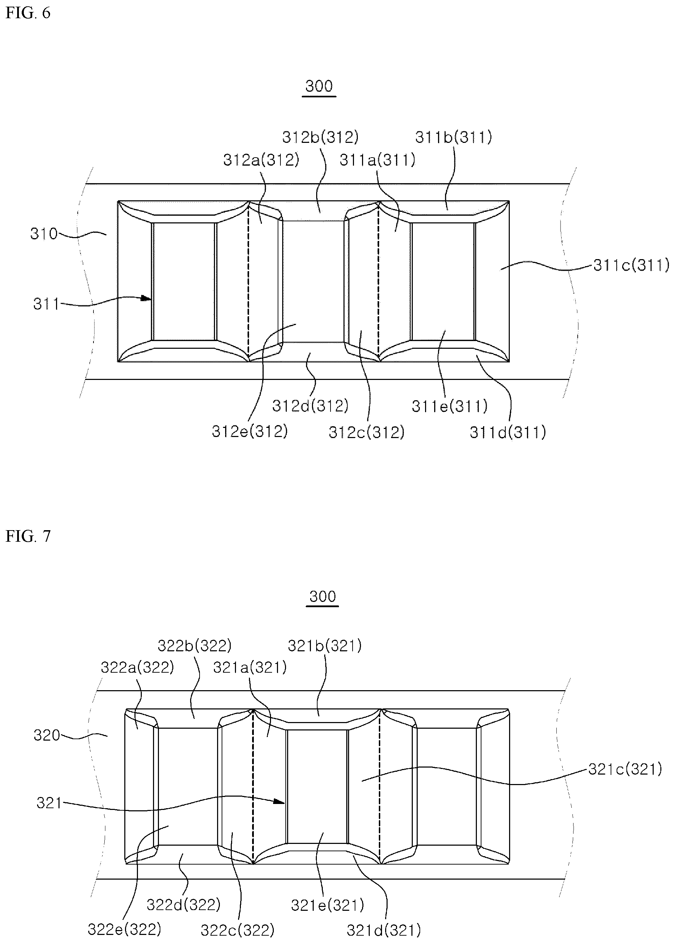

Hereinafter, referring to FIGS. 5 to 8, a pneumatic tire 1 according to a second embodiment will be described. In a description of the second embodiment of the present disclosure, differences from the above-described first embodiment will be mainly described, and the same description and reference numerals as those of the above-described embodiments will be used.

Referring to FIGS. 5 to 7, in a first sipe surface 310 of the pneumatic tire 1 according to the second embodiment of the present disclosure, the first connector 313 may be omitted. Furthermore, an area of the first concave upper surface 311e may be formed to be larger than an area of each of the first concave side surfaces 311a, 311b, 311c, and 311d. The area of the first convex upper surface 312e may be formed to be larger than the areas of the first convex side surfaces 312a, 312b, 312c, and 312d.

On the second side surface 320, the second connector 323 may be omitted. Furthermore, an area of the second concave upper surface 321e may be formed to be larger than areas of the second concave side surfaces 321a, 321b, 321c, and 321d. The area of the second convex upper surface 322e may be formed to be larger than the areas of the second convex side surfaces 322a, 322b, 322c, and 322d.

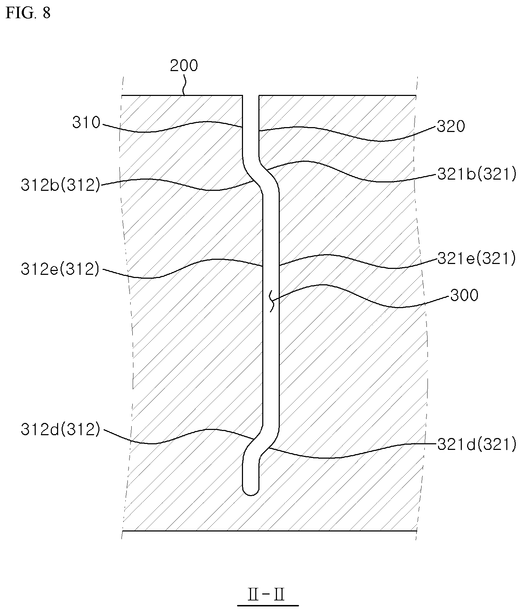

Referring further to FIG. 8, only one first concave portion 311 or one first convex portion 312 may be disposed on the first sipe surface 310 in the radial direction. Furthermore, only one second concave portion 321 or one second convex portion 322 may be disposed on the second sipe surface 320 in the radial direction.

Furthermore, the sipe 300 according to the first embodiment of the present disclosure and the sipe 300 according to the second embodiment may be formed together in the pneumatic tire 1. The plurality of sipes 300 may be formed in the block 200 to be skewed, but the present disclosure is not limited thereto, and the plurality of sipes 300 may be formed in parallel to each other.

Although the embodiments of the present disclosure have been described as specific embodiments, this is merely an example, and the present disclosure should be construed as having the broadest scope according to the technical idea disclosed herein without being limited thereto. Those skilled in the art may implement a pattern of a shape not indicated herein by combining/substituting the disclosed embodiments, but this also does not deviate from the scope of the present disclosure. In addition, those skilled in the art may easily change or modify the disclosed embodiments based on the present specification, and it is clear that such changes or modifications also fall within the scope of the present disclosure.

## Claims

1. A pneumatic tire comprising:
a tread having a tread surface contacting a travel road surface; a side wall extending in a radial direction of the tire to form a side surface of the tire; a bead portion contacting a rim of a tire wheel and configured to provide a support force; and a carcass configured to provide a frame of the tire,
wherein the tread includes:
a groove formed to be recessed inward in the radial direction on the tread surface, and extending along a circumferential direction of the tire; and
a plurality of sipes formed to be recessed inward from the tread surface in the radial direction, and disposed along the circumferential direction,
wherein each sipe includes:
a first sipe surface and a second sipe surface formed to face each other, and
wherein the first sipe surface includes:
a first convex portion protruding from the first sipe surface in one direction facing the second sipe surface; and
a first concave portion connected to the first convex portion and recessed in an opposite direction of the one direction,
wherein the first convex portion and the first concave portion are disposed along an extension direction of said each sipe.

2. The pneumatic tire of claim 1, wherein each sipe is formed in an extension direction skewed from the circumferential direction to be connected to the groove.

3. The pneumatic tire of claim 1 or 2, wherein the first convex portion and the first concave portion are formed in a tapered shape,
wherein the first convex portion includes:
a first convex upper surface being a surface most protruded from the first sipe surface, when viewed in the one direction facing the second sipe surface, and
wherein the first concave portion includes:
a first concave upper surface being a surface most recessed from the first sipe surface, when viewed in the opposite direction.

4. The pneumatic tire of claim 3, wherein the first convex portion further includes:
a first convex side surface extending from the first sipe surface toward the first convex upper surface, and surrounding the first convex upper surface, and
wherein a width of the first convex side surface in the extension direction becomes smaller as it becomes closer to the first convex upper surface.

5. The pneumatic tire of any one of claims 1 to 4, wherein the second sipe surface includes:
a second convex portion protruding from the second sipe surface in the opposite direction facing the first sipe surface, and corresponding to a shape of the first concave portion to be engaged therewith; and
a second concave portion connected to the second convex portion along the extension direction to be recessed in the one direction.

6. The pneumatic tire of any one of claims 1 to 5, wherein a length from one end of the first convex portion disposed on an outermost side with respect to the radial direction to an uppermost end of each sipe in the radial direction is 0.5 mm or more and 2 mm or less, and
wherein a length from the opposite end of the first convex portion disposed on an innermost side with respect to the radial direction to a lowermost end of each sipe is 0.5 mm or more and 2 mm or less.

7. The pneumatic tire of any one of claims 1 to 6, wherein a width of any one of the first convex portion and the first concave portion in the extension direction is 2 mm or more and 4 mm or less.

8. The pneumatic tire of claim 3 or 4, wherein a protrusion protruding while defining a curved surface having a specific curvature is formed at at least a portion of the first convex upper surface, and
wherein a recess recessed while defining a curved surface having a specific curvature is formed at at least a portion of the first concave upper surface.

9. The pneumatic tire of any one of claims 1 to 8, wherein a plurality of first convex portions and a plurality of first concave portions are provided, and the plurality of first convex portions and the plurality of first concave portions are alternately arranged along the
extension direction, in which each sipe extends.

## Amended claims

### Amended claims in accordance with Rule 137(2) EPC.

1. A pneumatic tire (1) comprising:
a tread (10) having a tread surface contacting a travel road surface; a side wall extending in a radial direction of the tire (1) to form a side surface of the tire (1); a bead portion configured to contact a rim of a tire wheel and configured to provide a support force; and a carcass configured to provide a frame of the tire (1),
wherein the tread (10) includes:
a groove (100) formed to be recessed inward in the radial direction on the tread surface, and extending along a circumferential direction of the tire (1); and
a plurality of sipes (300) formed to be recessed inward from the tread surface in the radial direction, and disposed along the circumferential direction,
wherein each sipe (300) includes:
a first sipe surface (310) and a second sipe surface (320) formed to face each other, and
wherein the first sipe surface (310) includes:
a first convex portion (312) protruding from the first sipe surface (310) in one direction facing the second sipe surface (320); and
a first concave portion (311) connected to the first convex portion (312) and recessed in an opposite direction of the one direction,
wherein the first convex portion (312) and the first concave portion (311) are disposed along an extension direction of said each sipe (300),
wherein a plurality of first convex portions (312) and a plurality of first concave portions (311) are provided, and the plurality of first convex portions (312) and the plurality of first concave portions (311) are alternately arranged along the extension direction, in which each sipe (300) extends,
wherein the plurality of first convex portions (312) are connected to each other along the radial direction of the tire (1), and the plurality of first concave portions (311) are connected to each other along the radial direction of the tire (1),
wherein the first convex portion (312) includes:
a first convex upper surface (312e) being a surface most protruded from the first sipe surface (310), when viewed in the one direction facing the second sipe surface (320), and
wherein the first concave portion (311) includes:
a first concave upper surface (311e) being a surface most recessed from the first sipe surface (310), when viewed in the opposite direction.

2. The pneumatic tire (1) of claim 1, wherein each sipe (300) is formed in an extension direction skewed from the circumferential direction to be connected to the groove (100).

3. The pneumatic tire (1) of claim 1 or 2, wherein the first convex portion (312) and the first concave portion (311) are formed in a tapered shape.

4. The pneumatic tire (1) of claim 3, wherein the first convex portion (312) further includes:
a plurality of first convex side surfaces (312a, 312b, 312c, 312d) extending from the first sipe surface (310) toward the first convex upper surface (312e), and surrounding the first convex upper surface (312e), and
wherein a width of each of the plurality of the first convex side surfaces (312a, 312b, 312c, 312d) in the extension direction becomes smaller as it becomes closer to the first convex upper surface (312e).

5. The pneumatic tire (1) of any one of claims 1 to 4, wherein the second sipe surface (320) includes:
a second convex portion (322) protruding from the second sipe surface (320) in the opposite direction facing the first sipe surface (310), and corresponding to a shape of the first concave portion (311) to be engaged therewith; and
a second concave portion (321) connected to the second convex portion (322) along the extension direction to be recessed in the one direction.

6. The pneumatic tire (1) of any one of claims 1 to 5, wherein a length from one end of the first convex portion (312) disposed on an outermost side with respect to the radial direction to an uppermost end of each sipe (300) in the radial direction is 0.5 mm or more and 2 mm or less, and
wherein a length from the opposite end of the first convex portion (312) disposed on an innermost side with respect to the radial direction to a lowermost end of each sipe (300) is 0.5 mm or more and 2 mm or less.

7. The pneumatic tire (1) of any one of claims 1 to 6, wherein a width of any one of the first convex portion (312) and the first concave portion (311) in the extension direction is 2 mm or more and 4 mm or less.
